# EUROPÄISCHE PATENTSCHRIFT

(11) **EP 2 029 351 B1**
(45) Veröffentlichungstag und Bekanntmachung des Hinweises auf die Patenterteilung: **01.01.2014**
(21) Anmeldenummer: 07847426.9
(22) Anmeldetag: 27.11.2007
(51) Int. Cl.: B32B 3/12, B32B 37/12

(54) **VERFAHREN ZUR HERSTELLUNG EINER LEICHTBAUPLATTE UND DAMIT HERGESTELLTE LEICHTBAUPLATTE**
METHOD FOR PRODUCING A LIGHTWEIGHT BUILDING BOARD, AND LIGHTWEIGHT BUILDING BOARD PRODUCED THEREBY
PROCÉDÉ DE FABRICATION D'UNE PLAQUE LÉGÈRE ET PLAQUE LÉGÈRE FABRIQUÉE AVEC CE PROCÉDÉ

(30) Priorität: 20.12.2006 DE 102006060940
(43) Veröffentlichungstag der Anmeldung: 04.03.2009
(73) Patentinhaber: Fritz Egger GmbH & Co. OG, 3105 Unterradlberg (AT)
(72) Erfinder: RIEPERTINGER, Manfred, 83093 Bad Endorf (DE); BERKTOLD, Albert, 6380 St. Johann/Tirol (AT)
(74) Vertreter: Cohausz & Florack
(86) Internationale Anmeldenummer: PCT/EP2007/062901
(87) Internationale Veröffentlichungsnummer: WO 2008/074601

(56) Entgegenhaltungen:
- WO-A-84/03728
- WO-A-98/08640
- WO-A2-00/45446
- DE-A1- 19 823 000
- SU-A1- 869 836
- US-A- 4 239 575
- DATABASE WPI Week 200218 Derwent Publications Ltd., London, GB; AN 2002-135197 XP002468186 & JP 2001 315227 A (HOKUYO SEISHI KK) 13. November 2001 (2001-11-13)

## Beschreibung

Die Erfindung betrifft ein Verfahren zur Herstellung einer Leichtbauplatte, die zwei Zellulosematerial enthaltende Decklagen und eine Mittellage aufweist. Ferner betrifft die Erfindung eine entsprechende Leichtbauplatte, insbesondere für Möbel und den Innenausbau, mit einer ersten und einer zweiten Zellulosematerial enthaltenden Decklage und mit einer Mittellage, die zwischen den beiden Decklagen angeordnet ist.

Platten der eingangs genannten Art sind aus dem Stand der Technik hinlänglich bekannt. Diese mehrschichtig aufgebauten Platten weisen in der Regel eine obere und eine untere Decklage, auch als Deckplatte bezeichnet, und einen dazwischenliegenden Kern, die sogenannte Mittellage, aus einem leichten Material auf. Für die Deckplatten können Holzwerkstoffplatten wie Sperrholzplatten, Spanplatten, Faserplatten - vorzugsweise beispielsweise HDF- oder MDF-Platten - oder OSB-Platten, vorzugsweise in einer Stärke von etwa 2 bis 12 mm herangezogen werden. Für die leichte Mittellage können geschäumte Materialien oder Wabenmaterialien aus Papier, Pappe, Karton, etc., verwendet werden. Dabei werden Streifen mit einer Breite, die anschliessend der Stärke der leichten Mittellage entspricht, abschnittweise und versetzt gegeneneinander verklebt, so dass durch anschließendes Strecken eine Struktur aus sechseckigen, aneinandergrenzenden Zellen entsteht, eben eine sogenannte Wabenstruktur.

Unterschieden wird grundsätzlich zwischen Platten mit Rahmen und rahmenlosen Leichtbauplatten. Bei der Herstellung von Platten mit einem Rahmen werden in der Regel auf das herzustellende Plattenformat abgestimmte Rahmenleisten auf eine vorformatierte untere Deckplatte geklebt, danach wird in den entstandenen Zwischenraum die Mittellage in Form einer Wabe - zumeist aus einem Kartonmaterial - eingelegt, woraufhin dann die obere Deckplatte aufgeklebt wird.

Bei rahmenlosen Wabenplatten wird lediglich ein Wabenkern als Mittellage mit der oberen und unteren Deckplatte verklebt. Das gewünschte Format wird erst anschließend aus der bevorzugt zunächst großformatig hergestellten Platte gesägt. Der Bereich der Schnittkanten kann dann nachträglich beispielsweise mit Riegeln oder Kantenprofilen aus Holz, Holzwerkstoff, Kunststoff oder Laminat oder Kombinationen daraus versehen werden.

Da Quer- und Schubkräfte bei, insbesondere rahmenlosen, Wabenplatten nur über den flächigen Verbund zwischen Deckplatten und Wabe abgetragen werden können, kommt hier der Verklebung zwischen Wabe und Deckplatten besondere Bedeutung zu. Um jedoch auf wirtschaftliche Weise rahmenlose Leichtbauplatten herstellen zu können, werden für diese Verklebung sehr rasch abbindende Klebstoffe verwendet, da sich ansonsten lange Presszeiten ergeben würden. Es sind daher für die Verklebung zwischen Deckplatten und Wabe oft Klebstoffe auf Polyurethanharz-Basis, sogenannte PU-Kleber, oder verschiedene Schmelzklebersysteme in Verwendung. Besonders geeignet sind Zweikomponenten-Polyurethanklebersysteme, sogenannte 2K-PU-Kleber, da diese besonders rasch zum Aushärten gebracht werden können. Diese sind jedoch in der Anschaffung relativ teuer, weswegen deren effizienter Einsatz von besonderer Bedeutung ist.

Ein weiterer beachtenewerter Umstand besteht darin, dass 2K-PU-Kleber, sobald die Komponenten einmal gemischt sind, auf nahezu allen Oberflächen anhaften und aushärten. Herkömmliche Auftragssysteme wie Walzen oder Rakel können daher ohne besondere Vorkehrungen nicht verwendet werden. Vielmehr kommen in der Regel Spezialdüsen zum Einsatz, in denen dann erst die Vermischung der Komponenten erfolgt. Auf die Klebeflächen wird dann mit Hilfe dieser Düsen entweder direkt oder, über rotierende Scheiben oder ähnliches, indirekt das Klebemittel aufgetragen. Wegen dieser beschränkten Möglichkeiten der Klebemittelaufbringung scheidet auch aus, ausschließlich die Wabenseite mit Klebemittel zu versehen.

Damit besteht das Problem, dass ein gezielter Auftrag eines rasch abbindenden Klebemittels in den Nahbereich der Kanten der Wabenstege nicht möglich ist, zumal durch das Aufspritzen des Klebemittels auf die Deckplatte ein in Bezug auf die spätere Lage der Wabenstege undefinierter Auftrag vorliegt. Damit kann jedoch nur ein beschränkter Teil des aufgebrachten Klebemittels den Verbund zwischen Wabe und Deckplatten bewirken. Die Anteile von aufgebrachtem Klebemittel, die bei der Deckplatte nicht im Bereich der Kante eines Wabensteges liegen, sind daher ungenutzt und verteuern die hergestellte Wabenplatte nachteilhaft.

Die SU 869 836 A1 beschreibt die Möglichkeit, eine Mittellage vor dem Zusammenführen mit einer Decklage an möglichst vielen Stellen mit Kleber zu versehen, was dadurch erreicht wird, dass die Mittellage an einer mit hoher Geschwindigkeit rotierenden Auftragswalze vorbeigeführt wird. Das Aufbringen eines Klebemittels auf eine Wabenstruktur mit Hilfe einer rotierenden Auftragswalze beschreibt auch die DE 198 23 000 A1. Weitere Möglichkeiten des Aufbringens eines Klebemittels sind der JP 2001 315 227 A, der WO 98/08640 A1 und der WO 84/03728 A1 zu entnehmen. Keines der beschriebenen Auftragsverfahren ist aber geeignet, die Anteile von aufgebrachtem Klebemittel nennenswert zu verringern.

Es ist daher die Aufgabe der vorliegenden Erfindung, das Vefahren und die Leichtbauplatte der eingangs genannten Art dahingehend weiterzubilden, dass die Anteile von aufgebrachtem Klebemittel besser genutzt werden.

Die zuvor hergeleitete und aufgezeigte Aufgabe wird gemäß einer ersten Lehre der vorliegenden Erfindung gelöst durch ein Verfahren zur Herstellung einer Leichtbauplatte mit den Merkmalen von Patentanspruch 1.
Durch die zusätzliche Relativbewegung während des Zusammenfügens der Decklage und der Mittellage wird zumindest von einem Teil der zu Beginn des Zusammenfügens noch nicht mit Klebemittel versehenen Abschnitte der Mittellage Klebemittel aufgenommen, womit dieses Klebemittel bei der wabenförmigen Mittellage in den Nahbereich der Wabenstege gelangt und so wirksam zur Verbindung beitragen kann.
Gemäß einer Ausgestaltung des erfindungsgemäßen Verfahrens werden ferner die folgenden Schritte durchgeführt:
- Bereitstellen einer zweiten Decklage,
- Auftragen eines Klebemittels auf eine Oberfläche der zweiten Decklage,
- Zusammenfügen der zweiten Decklage mit der Mittellage, wobei die mit dem Klebemittel versehene Oberfläche der Mittellage zugekehrt wird, und
- Ausführen einer Relativbewegung zwischen der zweiten Decklage und der Mittellage.

Mit anderen Worten, sowohl die erste Decklage als auch die zweite Decklage können jeweils an einer Oberfläche mit einem Klebemittel versehen werden, wobei die jeweilige Decklage mit der Mittellage der Leichtbauplatte, bei der es sich um eine wabenförmige Platte, kurz Wabenplatte, handelt, zusammengefügt wird und eine Relativbewegung zwischen der jeweiligen Decklage und der Mittellage ausgeführt wird.

Gemäß einer weiteren Ausgestaltung des erfindungsgemäßen Verfahrens wird die Relativbewegung zwischen der ersten und/oder zweiten Decklage und der Mittellage während und/oder nach dem Schritt des Zusammenfügens ausgeführt. Wird die Relativbewegung während des Zusammenfügens ausgeführt, so hat dies den Vorteil einer deutlichen Zeitersparnis, was wiederum die Herstellzeiten reduziert.

Die Relativbewegung zwischen der ersten und/oder zweiten Decklage und der Mittellage wird gemäß noch einer weiteren Ausgestaltung des erfindungsgemäßen Verfahrens zumindest teilweise parallel zur Oberfläche der ersten und/oder zweiten Decklage ausgeführt. Mit anderen Worten, die Relativbewegung kann sich aus mehreren aufeinanderfolgenden Bewegungen in verschiedene Richtungen zusammensetzen, wobei zumindest eine der Bewegungen parallel zur Oberfläche verläuft. Es ist aber auch denkbar, dass die Relativbewegung aus mehreren Richtungskomponenten zusammengesetzt ist, von denen zumindest eine senkrecht zur Oberfläche verläuft. Wesentlich ist letztlich, dass zumindest eine parallele Bewegung oder Bewegungskomponente vorgesehen ist, derart, dass das zuvor auf die Oberseite der der Mittellage zugewandten Oberfläche der zu verklebenden Decklage aufgebrachte Klebemittel möglichst vollständig erfasst wird und so bei der wabenförmigen Mittellage in den Nahbereich der Wabenstege gelangt.

Bei dem vorangehenden Verfahren kann das Auftragen eines Klebemittels auf eine Oberfläche der zweiten Decklage während und/oder nach dem Schritt des Auftragens eines Klebemittels auf eine Oberfläche der ersten Decklage erfolgen. Erfolgt das Auftragen des Klebemittels gleichzeitig auf die erste und zweite Decklage, so verkürzt sich die Herstellzeit zusätzlich.

Noch eine weitere Verkürzung der Herstellzeit kann dadurch erreicht werden, dass das Zusammenfügen der zweiten Decklage mit der Mittellage während dem Schritt des Zusammenfügens der ersten Decklage mit der Mittellage erfolgt. Es ist aber auch denkbar, dass das Zusammenfügen der zweiten Decklage mit der Mittellage nach dem Schritt des Zusammenfügens der ersten Decklage mit der Mittellage erfolgt.

Je nach dem, wie die zumindest eine Decklage mit der Mittellage zusammengefügt wird, ist es auf verschiedene Arten, die im folgenden näher beschrieben werden, möglich, die Relativbewegung während oder nach dem Fügen vorzusehen.

Wird die zumindest eine Decklage mit der Mittellage durch eine Bewegung normal zur Plattenebene gefügt, erfolgt also das Zusammenfügen der ersten und/oder zweiten Decklage mit der Mittellage in einer Richtung senkrecht zur mit dem Klebemittel versehenen Oberfläche, kann die Relativbewegung durch eine gleichzeitig vorzusehende Bewegung der Mittellage in Richtung der Plattenebene erfolgen. Dabei kann die wabenförmige Mittellage auch eine zusätzliche Streckung erfahren oder es ist auch möglich, dass die Relativbewegung zwischen Wabe und Platte bei dieser Art der Fügung alleine durch eine Streckung der Wabe erfolgt.

Eine alternative oder zusätzliche Vorgangsweise zur Bewerkstelligung einer Relativbewegung zwischen der zumindest einen Decklage und der Mittellage kann durch ein Zusammenführen in einem Winkel erfolgen. Mit anderen Worten, das Zusammenfügen der ersten und/oder zweiten Decklage mit der Mittellage kann in einer Richtung winkelig zur mit dem Klebemittel versehenen Oberfläche erfolgen. Dabei ist es umso günstiger, je flacher der Winkel zwischen der Bewegung der Platte und der Wabe während des Fügens ist, da so eine größere Relativbewegung in Plattenebene und damit ein vergrößerter Anteil an Klebemittel während des Fügens mitgenommen wird.

Auch kann eine Relativbewegung durch ein Zuführen der Decklage zur Mittellage oder umgekehrt in einer Bogenbewegung bewerkstelligt werden, was hinsichtlich des erforderlichen Platzbedarfs zur Durchführung des Fügevorgangs vorteilhaft ist.

Gemäß einer weiteren Ausgestaltung des erfindungsgemäßen Verfahrens ist eine rotierende Relativbewegung zwischen der ersten und/oder zweiten Decklage und der Mittellage vorgesehen, wobei die Rotation vorzugsweise um eine Achse senkrecht zur mit dem Klebemittel versehenen Oberflächen erfolgt. Damit wird erreicht, dass nicht nur Klebemittel durch die quer zur Bewegungsrichtung stehenden Oberflächen der Wabenstege mitgenommen werden kann, sondern alle Wabenstege nehmen weitgehend gleich viel und zu beiden Seiten Klebemittel mit, wodurch ein hohes Maß an regelmäßiger Klebstoffverteilung im Nahbereich der Wabenstege erreicht wird.

Die beschriebenen Relativbewegungen in Plattenebene müssen nicht gleichzeitig mit dem Fügen erfolgen, sondern können auch später erfolgen, wobei dann darauf zu achten ist, dass der Abbindevorgang des Klebemittels noch nicht so weit fortgeschritten ist, dass der Abbindevorgang nachteilhaft gestört wird, und dass eine Relativbewegung überhaupt noch möglich ist.

Gemäß einer weiteren Ausgestaltung des erfindungsgemäßen Verfahrens weisen die einander zugekehrten Oberflächen der ersten und/oder zweiten Decklage und der Mittellage, insbesondere die Kanten von Stegen einer wabenförmigen Mittellage, in unterschiedlichen Richtungen unterschiedliche Reibungswiderstände gegeneinander auf. Dies kann beispielsweise durch angeschrägte Kanten der Wabenstege erreicht werden, derart, dass die einzelnen Streifen der späteren Wabenstege vorzugsweise die Querschnittform eines Parallelogramms erhalten. Es ergibt sich so eine Oberfläche der wabenförmigen Mittellage, die in Ihrem Querschnitt ein Sägezahnprofil aufweist. Es hat sich gezeigt, dass durch eine solcherart ausgebildete Oberfläche der Wabenstruktur, die Decklage in Bezug auf die Wabenstruktur in Richtung gegen den Sägezahn, also von der Sägezahnspitze zur Schräge hin, eine wesentlich höhere Reibung aufweist als in die entgegengesetzte Richtung. So kann auf einfache Weise eine definierte Relativbewegung nach dem Fügen der Decklagen und der Wabenstruktur erfolgen, indem erst eine der Decklagen gehalten wird und die andere Decklage in Plattenebene in Richtung des geringeren Reibungswiderstandes verschoben wird und dann festgehalten wird, woraufhin dann die zuerst festgehaltene Decklage in Plattenebene in Richtung deren geringeren Reibungswiderstandes gegenüber der Wabenstruktur verschoben wird.

Ein wesentlicher weiterer Vorteil dieser Ausgestaltung liegt in der Vergrößerung der Kontaktfläche zwischen dem jeweiligen Wabensteg und der jeweiligen Decklage. Im Zuge des Verpressens der Decklagen mit der Mittellage erfolgt vorzugsweise eine geringfügige Deformation des Kantenbereichs, sodass die Schrägfläche der Kante des Kantensteges zumindest teilweise als Kontaktfläche und damit als Klebefläche wirksam wird. Das bewirkt wiederum eine höhere Festigkeit der Klebeverbindung was in der Folge zu insgesamt verbesserten mechanischen Eigenschaften der Leichtbauplatte führt.

Gemäß noch einer weiteren Ausgestaltung des erfindungsgemäßem Verfahrens wird das Klebemittel, das nicht zwingend durchgängig, sondern auch partiell aufgetragen werden kann, in Form von Tröpfchen aufgetragen. Auch ein anderer durchgängiger oder partieller Auftrag ist denkbar, beispielsweise in Form von Streifen oder einer Kombination aus Tröpfchen und Streifen.

Die zuvor hergeleitete und aufgezeigte Aufgabe wird ferner gemäß einer zweiten Lehre der vorliegenden Erfindung bei einer Leichtbauplatte, insbesondere für Möbel und den Innenausbau, vorzugsweise einer wie zuvor beschrieben hergestellten Leichtbauplatte, mit einer ersten und einer zweiten Zellulosematerial enthaltenden Decklage und mit einer wabenförmigen Mittellage, die zwischen den beiden Decklagen angeordnet ist, dadurch gelöst, dass auf einer Oberfläche der ersten Decklage ein durch eine zumindest teilweise zur Decklagenoberfläche parallele Relativbewegung zwischen der ersten Decklage und der Mittellage verteiltes Klebemittel vorgesehen ist. Vorzugsweise ist auch auf einer Oberfläche der zweiten Decklage ein durch eine Relativbewegung zwischen der zweiten Decklage und der Mittellage verteiltes Klebemittel vorgesehen. Auch hier kann der Auftrag des Klebemittels durchgängig oder partiell sein.

Gemäß einer weiteren Ausgestaltung der erfindungsgemäßen Leichtbauplatte weisen die einander zugekehrten Oberflächen der ersten und/oder zweiten Decklage und der Mittellage, insbesondere die Kanten von Stegen einer wabenförmigen Mittellage, in unterschiedlichen Richtungen unterschiedliche Reibungswiderstände gegeneinander auf. So kann auf einfache Weise eine definierte Relativbewegung nach dem Fügen der Deckplatten mit der Wabe erfolgen, was bei der fertigen Leichtbauplatte zu einem reduzierten Klebemittelanteil sowie zu einer verbesserten Festigkeit der Platte führt.

Um die unterschiedlichen Reibungswiderstände gegeneinander zu erhalten, können die Kanten der Stege angeschrägt sein. Alternativ oder zusätzlich kann die Oberfläche bzw. können die Oberflächen der Mittellage im Querschnitt ein Sägezahnprofil aufweisen.

Es gibt nun eine Vielzahl von Möglichkeiten, das erfindungsgemäße Herstellungsverfahren und die erfindungsgemäße Leichtbauplatte auszugestalten und weiterzubilden. Hierzu wird beispielsweise verwiesen einerseits auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: eine perspektivische Ansicht einer mit einem Klebemittel versehenen Decklage einer erfindungsgemäßen Leichtbauplatte,
- Fig. 2a): eine Draufsicht auf eine wabenförmige Mittellage einer erfindungsgemäßen Leichtbauplatte,
- Fig. 2b): eine perspektivische Ansicht eines Teils der wabenförmigen Mittellage aus Fig. 2a), und
- Fig. 3a) und b): eine schematische Darstellung des Verfahrensschritts des Ausführens einer Relativbewegung zwischen der Decklage aus Fig. 1 und der Mittellage aus Fig. 2.

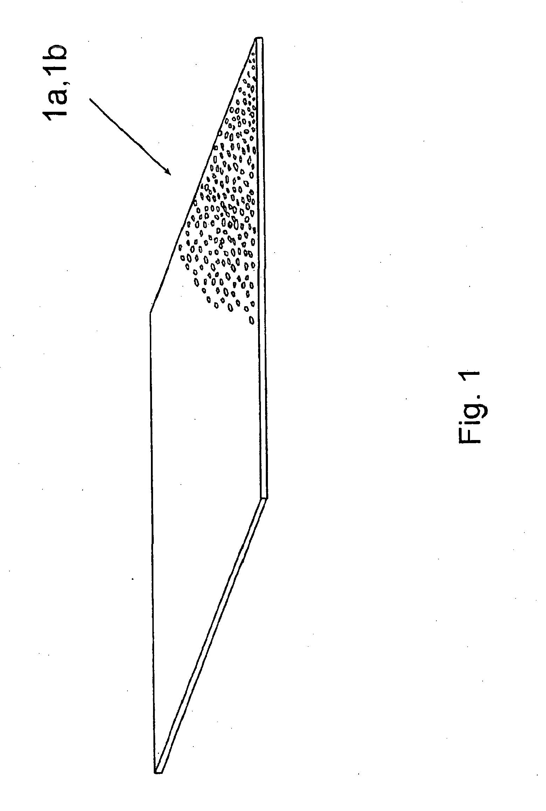

Aus Fig. 1 ist eine Platte aus einem Holzwerkstoff dargestellt, die als erste Decklage 1a oder als zweite Decklage 1b einer Leichtbauplatte verwendet werden kann.

In Form kleiner Tröpfchen ist auf die Oberfläche der Decklage 1a bzw. 1b ein Klebemittel aufgebracht, welches dazu dient, eine Mittellage 2 mit der Decklage 1a bzw. 1b zu verbinden.

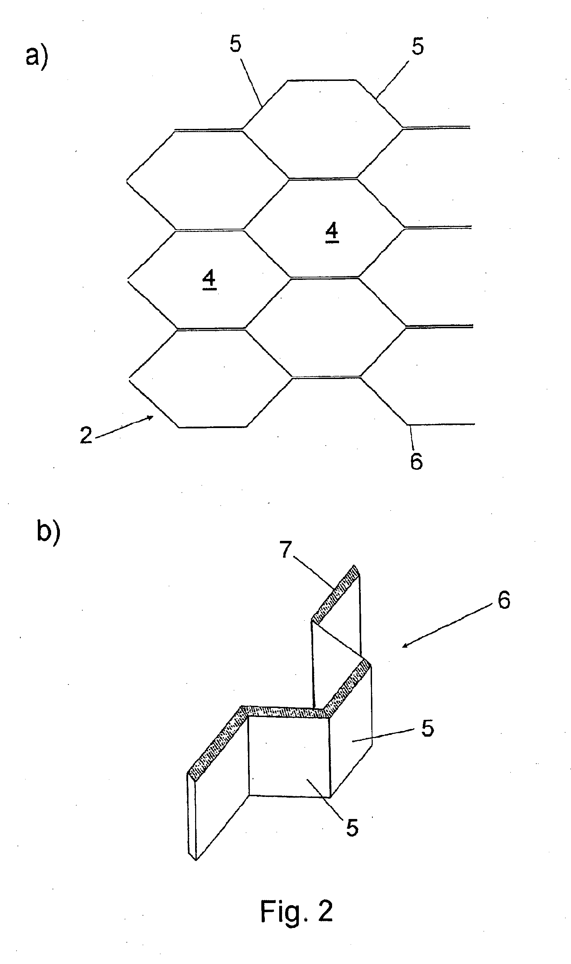

In Fig. 2a) und b) ist ein Beispiel einer solchen Mittellage 2 dargestellt. Im vorliegenden Ausführungsbesipiel ist die Mittellage 2 wabenförmig ausgebildet, wobei jede Wabe 4 sechs Stege 5 aufweist. Die Stege 5 werden von Streifen 6 aus Karton gebildet, deren Breite der Stärke der Mittellage 2 entspricht.

Ein Beispiel für einen solchen Streifen 6 ist ausschnittweise in Fig. 2b) dargestellt. Zur Herstellung der Mittellage 2 werden mehrere solcher Streifen 6 versetzt gegeneinander verklebt, wobei lediglich Abschnitte der Streifen mit Klebemittel versehen werden. Auf diese Weise wird durch anschließendes Strecken eine Struktur aus sechseckigen, aneinandergrenzenden Zellen, die sogenannte Wabenstruktur, erzeugt, wie sie in Fig. 2a) dargestellt ist.

Als Besonderheit weist der in Fig. 2b) dargestellte Streifen 6 mehrere Stege 5 auf, deren Kanten 7 angeschrägt sind. Werden mehrere solcher Streifen 6 miteinander verklebt, ergibt sich eine Oberfläche der Mittellage 2, die im Querschnitt ein Sägezahnprofil aufweist. Auf diese Weise wird mit einfachen Mitteln eine wabenförmige Mittellage 2 erhalten, die ermöglicht, dass im zusammengefügten Zustand die einander zugekehrten Oberflächen der ersten bzw, zweiten Decklage 1a, 1b und der Mittellage 2 in unterschiedlichen Richtungen unterschiedliche Reibungswiderstände gegeneinander aufweisen. Auf diese Weise wird wiederum eine definierte Relativbewegung nach dem Fügen der Decklagen 1a bzw. 1b und der wabenförmigen Mittellage 2 gewährleistet, indem erst die eine Decklage 1a gehalten wird und die andere Decklage 1b in Plattenebene in Richtung des geringeren Reibungswiderstandes verschoben wird und dann festgehalten wird, woraufhin dann die zuerst festgehaltene Decklage 1a in Plattenebene in Richtung deren geringeren Reibungswiderstandes gegenüber der Mittellage 2 verschoben wird.

Vorzugsweise ist, wie in Fig. 2b) dargestellt, der Verlauf der angeschrägten Kanten 7 auf der Oberseite parallel zum Verlauf der angeschrägten Kanten auf der Unterseite des Streifens 6.

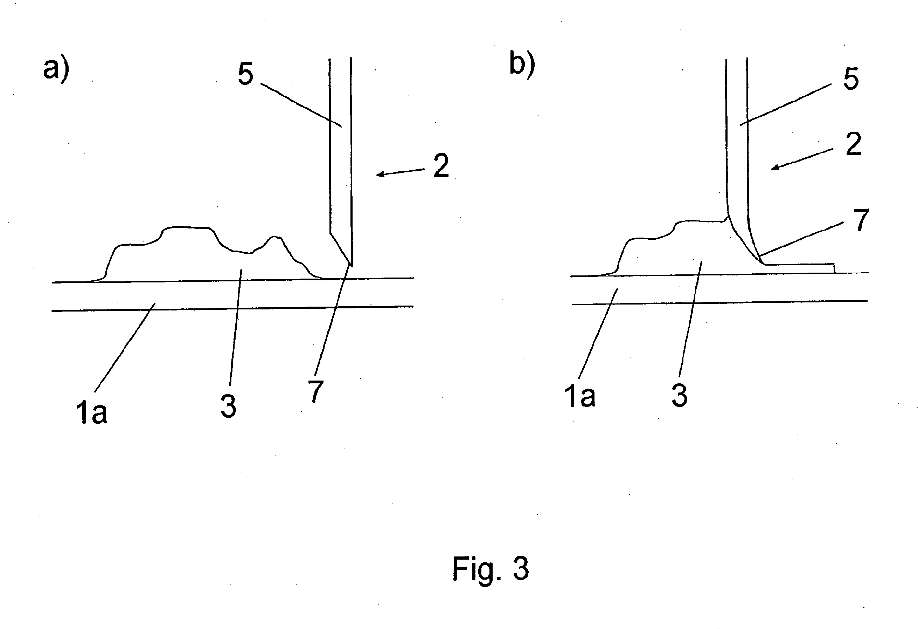

In den Figuren 3a) und b) ist schließlich der Vorgang des Ausführens der Relativbewegung zwischen der ersten Decklage 1a und der Mittellage 2, von der hier lediglich ein Steg 5 mit angeschrägter Kante 7 gezeigt ist, dargestellt.

Dabei zeigt Fig. 3a) den Zustand vor Ausführen der Relativbewegung und Fig. 2b) den Zustand während bzw. nach dem Ausführen der Relativbewegung.

Bei Vergleich der Fig. 3a) mit der Fig. 3b) ist deutlich zu erkennen, dass das in Form eines Tröpfchens aufgetragene Klebemittel 3 durch bloßes Zusammenfügen der ersten Decklage 1a mit der Mittellage 2 noch nicht mit dem Steg 5 der Wabenstruktur in Kontakt gekommen ist. Erst durch Ausführen einer Relativbewegung zwischen der ersten Decklage 1a und der Mittellage 2 wird der Steg 5 durch das Klebemittel 3 bzw. in dieses hineinbewegt. Auf diese Weise ist gewährleistet, dass jeder Steg 5 der Mittellage 2 die Möglichkeit hat, mit dem Klebemittel 3 in Kontakt zu kommen.

Die angeschrägte Kante 7 des Steges 5 hat den Vorteil einer Vergrößerung der Kontaktfläche zwischen dem jeweiligen Steg 5 und der Decklage 1a. Im Zuge des Verpressens der Decklage 1a mit der Mittellage 2 erfolgt, wie in Fig. 3b) dargestellt, im vorliegenden Fall eine Deformation des Kantenbereichs, sodass die Schrägfläche der Kante 7 zumindest teilweise als Kontaktfläche und damit als Klebefläche wirksam wird. Das bewirkt wiederum eine höhere Festigkeit der Klebeverbindung was in der Folge zu insgesamt verbesserten mechanischen Eigenschaften der Leichtbauplatte führt.

Im folgenden sei anhand von zwei Beispielen die Herstellung einer Leichtbauplatte gemäß dem erfindungsgemäßen Herstellungsverfahren beschrieben.

### Beispiel 1:

In einer Anlage zur automatisierten Herstellung von rahmenlosen Wabenplatten wird eine Decklage von oben mit einem 2K-PU-Kleber besprüht. Die so vorbehandelte Decklage, hier eine 8 mm dicke Spanplatte, wird anschließend zu einem Wender mit Vakuumsaugnäpfen verfahren. Der Wender mit den Vakuumsaugnäpfen ist derart ausgeführt, dass die Decklage von deren unbeleimter Unterseite mit den Vakuumsaugnäpfen gehalten werden kann, während die Decklage auf eine nebenliegende, gestreckte Wabe geschwenkt wird. Unmittelbar vor dem Zusammentreffen der Decklage mit der Wabe werden die Vakuumsaugnäpfe in Rotation versetzt, womit die Decklage neben der Bewegung zur Wabe hin auch eine rotierende Bewegung in Plattenebene ausführt. Bis die Decklage nun vollflächig in Kontakt mit der Wabe kommt, wird an den Kanten der Wabenstege gleichmäßig Klebstoff aufgeschoben, womit dieser in den Nahbereich der Kanten der Wabenstege gelangt und so für die Klebeverbindung nutzbar wird. Anschließend wir die Decklage mit der Wabe gewendet und es wird die zweite Decklage nach dem beschriebenen Ablauf aufgebracht. Daraufhin wird der gesamte Aufbau in eine Presse verfahren, wo unter Einstellung der gewünschten Enddicke die Aushärtung des Klebstoffes erfolgt.

Die nach diesem Verfahren hergestellte Leichtbauplatte weist eine um mehr als 40% höhere Querzugfestigkeit auf als eine mit gleichem Klebstoffauftrag, aber ohne Relativbewegung beim Fügen von Decklagen und Mittellage, hergestellte Platte.

### Beispiel 2:

Zur Herstellung einer rahmenlosen Wabenplatte wird auf eine mit einem Schmelzkleber besprühte Decklage, hier eine 6 mm Dicke MDF-Platte, eine gestreckte Kartonwabe mit abgeschrägten Kanten der Stegflanken gelegt. Darauf wird eine weitere, ebenfalls mit Schmelzkleber besprühte Decklage gelegt. Nun wird die von oben aufgelegte Decklage fixiert und die untere Decklage wird in Richtung mit der Sägezahnung zwischen unterer Decklage und Wabe verschoben. Anschließend wird die untere Decklage fixiert und die obere Decklage wird in die entgegengesetzte Richtung, welche hier wiederum die Richtung mit dem Sägezahn zwischen oberer Decklage und Wabe ist, verschoben. Daraufhin wird der gesamte Aufbau in eine Presse verfahren, wo unter Einstellung der gewünschten Enddicke die Aushärtung des Klebstoffes erfolgt.

Die nach diesem Verfahren hergestellte Leichtbauplatte weist eine um mehr als 28% höhere Querzugfestigkeit auf als eine mit gleichem Klebstoffauftrag aber ohne Relativbewegung beim Fügen von Decklagen und Mittellage, hergestellte Platte.

## Patentansprüche

1. Verfahren zur Herstellung einer Leichtbauplatte, die zwei Zellulosematerial enthaltende Decklagen (1a,1b) und eine Mittellage (2) aufweist, wobei die Mittellage (2) aus Papier, Pappe oder Karton ist, bei dem die folgenden Schritte durchgeführt werden:
- Bereitstellen der ersten Decklage (1a),
- Auftragen eines Klebemittels (3) auf eine Oberfläche der ersten Decklage (1a),
- wobei das Klebemittel (3) durchgängig oder partiell und insbesondere in Form von Tröpfchen aufgetragen wird,
- Bereitstellen der wabenförmigen Mittellage (2)
- Zusammenfügen der ersten Decklage (1a) mit der Mittellage (2), wobei die mit dem Klebemittel (3) versehene Oberfläche der Mittellage (2) zugekehrt wird, und
- Ausführen einer zumindest teilweise zur Decklagenoberfläche parallelen Relativbewegung zwischen der mit Klebemittel versehenen ersten Decklage (1a) und der Mittellage (2), bei der das Klebemittel (3) auf der Decklage (1a) durch die Relativbewegung verteilt wird.

2. Verfahren nach Anspruch 1, **dadurch gekennzeichnet, dass** ferner die folgenden Schritte durchgeführt werden:
- Bereitstellen einer zweiten Decklage (1b),
- Auftragen eines Klebemittels (3) auf eine Oberfläche der zweiten Decklage (1b),
- Zusammenfügen der zweiten Decklage (1b) mit der Mittellage (2), wobei die mit dem Klebemittel (3) versehene Oberfläche der Mittellage (2) zugekehrt wird, und
- Ausführen einer Relativbewegung zwischen der zweiten Decklage (1b) und der Mittellage (2).

3. Verfahren nach Anspruch 1 oder 2, **dadurch gekennzeichnet, dass** die Relativbewegung zwischen der ersten und/oder zweiten Decklage (1a,1b) und der Mittellage (2) während und/oder nach dem Schritt des Zusammenfügens ausgeführt wird.

4. Verfahren nach einem der vorangehenden Ansprüche, **dadurch gekennzeichnet, dass** die Relativbewegung zwischen der ersten und/oder der zweiten Decklage (1a,1b) und der Mittellage (2) zumindest teilweise parallel zur Oberfläche der ersten und/oder zweiten Decklage (1a,1b) ausgeführt wird.

5. Verfahren nach einem der vorangehenden Ansprüche, **dadurch gekennzeichnet, dass** das Auftragen des Klebemittels (3) auf die Oberfläche der zweiten Decklage (1b) während und/oder nach dem Schritt des Auftragens des Klebemittels (3) auf die Oberfläche der ersten Decklage (1a) erfolgt.

6. Verfahren nach einem der vorangehenden Ansprüche, **dadurch gekennzeichnet, dass** das Zusammenfügen der zweiten Decklage (1b) mit der Mittellage (2) während und/oder nach dem Schritt des Zusammenfügens der ersten Decklage (1a) mit der Mittellage (2) erfolgt und/oder dass das Zusammenfügen der ersten und/oder zweiten Decklage (1a,1b) mit der Mittellage (2) in einer Richtung senkrecht zur mit dem Klebemittel (3) versehenen Oberfläche erfolgt und/oder dass das Zusammenfügen der ersten und/oder zweiten Decklage (1a,1b) mit der Mittellage (2) in einer Richtung winkelig zur mit dem Klebemittel (3) versehenen Oberfläche erfolgt.

7. Verfahren nach einem der Ansprüche 1 bis 6, **dadurch gekennzeichnet, dass** das Zusammenfügen der ersten und/oder zweiten Decklage (1a,1b) mit der Mittellage (2) in einer Bogenbewegung erfolgt.

8. Verfahren nach einem der vorangehenden Ansprüche, **dadurch gekennzeichnet, dass** eine rotierende Relativbewegung zwischen der ersten und/oder zweiten Decklage (1a,1b) und der Mittellage (2) vorgesehen ist, wobei die Rotation vorzugsweise um eine Achse senkrecht zur mit dem Klebemittel versehenen Oberfläche erfolgt.

9. Verfahren nach Anspruch 1, **dadurch gekennzeichnet, dass** die wabenförmige Mittellage (2) während des Schritts des Zusammenfügens der ersten und/oder zweiten Decklage (1a,1b) mit der Mittellage (2) gestreckt wird und/oder dass die wabenförmige Mittellage (2) während des Schritts des Ausführens einer Relativbewegung zwischen der ersten und/oder zweiten Decklage (1a,1b) und der Mittellage (2) gestreckt wird.

10. Verfahren nach einem der vorangehenden Ansprüche, **dadurch gekennzeichnet, dass** die einander zugekehrten Oberflächen der ersten und/oder zweiten Decklage (1a,1b) und der Mittellage (2), insbesondere die Kanten (7) von Stegen (5) einer wabenförmigen Mittellage (2), in unterschiedlichen Richtungen unterschiedliche Reibungswiderstände gegeneinander erhalten.

11. Verfahren nach Anspruch 11, **dadurch gekennzeichnet, dass** beim Bereitstellen der Mittellage (2) die Kanten (7) der Stege (5) angeschrägt werden und/oder dass beim Bereitstellen der Mittellage (2) die Oberfläche(n) der Mittellage (2) im Querschnitt ein Sägezahnprofil erhält bzw. erhalten.

12. Leichtbauplatte, insbesondere für Möbel und den Innenausbau, vorzugsweise hergestellt durch ein Verfahren nach einem der vorangehenden Ansprüche,
- mit einer ersten und einer zweiten Zellulosematerial enthaltenden Decklage (1a,1b) und
- mit einer wabenförmigen Mittellage (2), die zwischen den beiden Decklagen (1a,1b) angeordnet ist,
- wobei die Mittellage (2) aus Papier, Pappe oder Karton ist,
**dadurch gekennzeichnet, dass** auf einer Oberfläche der ersten Decklage (1a) ein durch eine zumindest teilweise zur Decklagenoberfläche parallele Relativbewegung zwischen der ersten Decklage (1a) und der Mittellage (2) verteiltes Klebemittel (3) vorgesehen ist.

13. Leichtbauplatte nach Anspruch 12, **dadurch gekennzeichnet, dass** auf einer Oberfläche der zweiten Decklage (1b) ein durch eine Relativbewegung zwischen der zweiten Decklage (1b) und der Mittellage (2) verteiltes Klebemittel (3) vorgesehen ist.

14. Leichtbauplatte nach einem der Ansprüche 12 bis 13, **dadurch gekennzeichnet, dass** die einander zugekehrten Oberflächen der ersten und/oder zweiten Decklage (1a,1b) und der Mittellage (2), insbesondere die Kanten (7) von Stegen (5) der wabenförmigen Mittellage (2), in unterschiedlichen Richtungen unterschiedliche Reibungswiderstände gegeneinander aufweisen.

15. Leichtbauplatte nach Anspruch 14, **dadurch gekennzeichnet, dass** die Kanten (7) der Stege (5) angeschrägt sind und/oder dass die Oberfläche(n) der Mittelage (2) im Querschnitt ein Sägezahnprofil aufweist bzw. aufweisen.

## Revendications

1. Procédé pour la fabrication d'un panneau alvéolaire, laquelle présente deux couches de recouvrement (1a, 1b) contenant du matériau cellulosique et une couche centrale (2), la couche centrale (2) étant en papier, carton-pâte ou carton, dans lequel on effectue les étapes suivantes :
- mise à disposition de la première couche de recouvrement (1a),
- application d'un agent adhésif (3) sur une surface de la première couche de recouvrement (1a),
- l'agent adhésif (3) étant appliqué en continu ou partiellement et en particulier sous la forme de gouttelettes,
- mise à disposition de la couche centrale alvéolé (2),
- assemblage de la première couche de recouvrement (1a) avec la couche centrale (2), moyennant quoi la surface munie de l'agent adhésif (3) est mise en face à la couche centrale (2), et
- exécution d'un mouvement relatif, au moins partiellement parallèle à la surface de la couche de recouvrement, entre la première couche de recouvrement (1a) munie de l'agent adhésif et la couche centrale (2), lors duquel l'agent adhésif (3) sur la couche de recouvrement (1a) est réparti grâce au mouvement relatif.

2. Procédé selon la revendication 1, **caractérisé en ce que** l'on effectue par ailleurs les étapes suivantes :
- mise à disposition d'une deuxième couche de recouvrement (1b),
- application d'un agent adhésif (3) sur une surface de la deuxième couche de recouvrement (1b),
- assemblage de la deuxième couche de recouvrement (1b) avec la couche centrale (2), moyennant quoi la surface munie de l'agent adhésif (3) est mise en face à la couche centrale (2), et
- exécution d'un mouvement relatif entre la deuxième couche de recouvrement (1b) et la couche centrale (2).

3. Procédé selon la revendication 1 ou 2, **caractérisé en ce que** le mouvement relatif entre la première et/ou deuxième couche de recouvrement (1a, 1b) et la couche centrale (2) est exécuté pendant et/ou après l'étape d'assemblage.

4. Procédé selon l'une des revendications précédentes, **caractérisé en ce que** le mouvement relatif entre la première et/ou deuxième couche de recouvrement (1a, 1b) et la couche centrale (2) est exécuté au moins partiellement parallèlement à la surface de la première et/ou deuxième couche de recouvrement (1a, 1b).

5. Procédé selon l'une des revendications précédentes, **caractérisé en ce que** l'application de l'agent adhésif (3) sur la surface de la deuxième couche de recouvrement (1b) est effectuée pendant et/ou après l'étape d'application de l'agent adhésif (3) sur la surface de la première couche de recouvrement (1a).

6. Procédé selon l'une des revendications précédentes, **caractérisé en ce que** l'assemblage de la deuxième couche de recouvrement (1b) avec la couche centrale (2) s'effectue pendant et/ou après l'étape d'assemblage de la première couche de recouvrement (1a) avec la couche centrale (2) et/ou **en ce que** l'assemblage de la première et/ou deuxième couche de recouvrement (1a, 1b) avec la couche centrale (2) s'effectue dans une direction perpendiculaire à la surface munie de l'agent adhésif (3) et/ou **en ce que** l'assemblage de la première et/ou deuxième couche de recouvrement (1a, 1b) avec la couche centrale (2) s'effectue dans une direction angulaire à la surface munie de l'agent adhésif (3).

7. Procédé selon l'une des revendications 1 à 6, **caractérisé en ce que** l'assemblage de la première et/ou deuxième couche de recouvrement (1a, 1b) avec la couche centrale (2) s'effectue en un mouvement courbe.

8. Procédé selon l'une des revendications précédentes, **caractérisé en ce que** l'on prévoit un mouvement relatif de rotation entre la première et/ou deuxième couche de recouvrement (1a, 1b) et la couche centrale (2), moyennant quoi la rotation s'effectue de préférence autour d'un axe perpendiculaire à la surface munie de l'agent adhésif.

9. Procédé selon la revendication 1, **caractérisé en ce que** la couche centrale (2) alvéolée est étirée pendant l'étape d'assemblage de la première et/ou deuxième couche de recouvrement (1a, 1b) avec la couche centrale (2) et/ou **en ce que** la couche centrale (2) alvéolée est étirée pendant l'étape d'exécution d'un mouvement relatif entre la première et/ou deuxième couche de recouvrement (1a, 1b) et la couche centrale (2).

10. Procédé selon l'une des revendications précédentes, **caractérisé en ce que** les surfaces se faisant face de la première et/ou deuxième couche de recouvrement (1a, 1b) et de la couche centrale (2), en particulier les arêtes (7) de nervures (5) d'une couche centrale (2) alvéolée, obtiennent différentes résistances à la friction les unes par rapport aux autres dans différentes directions.

11. Procédé selon la revendication 11, **caractérisé en ce que**, lors de la mise à disposition de la couche centrale (2), les arêtes (7) des nervures (5) sont chanfreinées et/ou **en ce que**, lors de la mise à disposition de la couche centrale (2), la ou les surface(s) de la couche centrale (2) obtient ou obtiennent un profil en dent de scie en coupe transversale.

12. Panneau alvéolaire, en particulier pour meubles et l'aménagement intérieur, de préférence fabriquée grâce à un procédé selon l'une des revendications précédentes,
- avec une première et une deuxième couche de recouvrement (1a, 1b) contenant un matériau cellulosique et
- avec une couche centrale (2) alvéolée, laquelle est disposée entre les deux couches de recouvrement (1a, 1b),
- la couche centrale (2) étant en papier, en carton-pâte ou en carton,
**caractérisée en ce que** l'on prévoit, sur une surface de la première couche de recouvrement (1a), un agent adhésif (3) réparti grâce à un mouvement relatif au moins partiellement parallèle à la surface de couche de recouvrement, entre la première couche de recouvrement (1a) et la couche centrale (2).

13. Panneau alvéolaire selon la revendication 12, **caractérisée en ce que** l'on prévoit un agent adhésif (3) réparti sur une surface de la deuxième couche de recouvrement (1b) grâce à un mouvement relatif entre la deuxième couche de recouvrement (1b) et la couche centrale (2).

14. Panneau alvéolaire selon l'une des revendications 12 à 13, **caractérisée en ce que** les surfaces se faisant face de la première et/ou deuxième couche de recouvrement (1a, 1b) et de la couche centrale (2), en particulier les arêtes (7) de nervures (5) de la couche centrale (2) alvéolée, présentent différentes résistances à la friction les unes par rapport aux autres dans différentes directions.

15. Panneau alvéolaire selon la revendication 14, **caractérisée en ce que** les arêtes (7) des nervures (5) sont chanfreinées et/ou **en ce que** la/les surface(s) de la couche centrale (2) présente ou présentent un profil en dent de scie en coupe transversale.

## Claims

1. A method for producing a lightweight board, which has two cover layers (1a, 1b) containing cellulose material and also has a middle layer (2), wherein the middle layer (2) consists of paper, cardboard or card, in which the following steps are performed:
- providing the first cover layer (1a),
- applying an adhesive (3) to a surface of the first cover layer (1a),
- wherein the adhesive (3) is applied continuously or partially and in particular in the form of drops,
- providing the honeycombed middle layer (2),
- joining the first cover layer (1a) to the middle layer (2), the surface provided with the adhesive (3) being turned towards the middle layer (2), and
- performing a relative movement, which is at least partially parallel to the cover layer surface, between the first cover layer (1a) provided with adhesive and the middle layer (2), the adhesive (3) being distributed over the cover layer (1a) due to the relative movement.

2. The method according to Claim 1, **characterised in that** the following steps are also carried out:
- providing a second cover layer (1b),
- applying an adhesive (3) to a surface of the second cover layer (1b),
- joining the second cover layer (1b) to the middle layer (2), the surface provided with the adhesive (3) being turned towards the middle layer (2), and
- performing a relative movement between the second cover layer (1b) and the middle layer (2).

3. The method according to Claim 1 or 2, **characterised in that** the relative movement between the first and/or second cover layer (1a, 1b) and the middle layer (2) is performed during and/or after the joining step.

4. The method according to one of the preceding claims, **characterised in that** the relative movement between the first and/or the second cover layer (1a, 1b) and the middle layer (2) is performed at least partially parallel to the surface of the first and/or second cover layer (1a, 1b).

5. The method according to one of the preceding claims, **characterised in that** the adhesive (3) is applied to the surface of the second cover layer (1b) during and/or after the step of applying the adhesive (3) to the surface of the first cover layer (1a).

6. The method according to one of the preceding claims, **characterised in that** the second cover layer (1b) is joined to the middle layer (2) during and/or after the step of joining the first cover layer (1a) to the middle layer (2), and/or **in that** the first and/or second cover layer (1a, 1b) is/are joined to the middle layer (2) in a direction perpendicular to the surface provided with the adhesive (3), and/or in that the first and/or second cover layer (1a, 1b) is/are joined to the middle layer (2) in a direction at an angle to the surface provided with the adhesive (3).

7. The method according to one of Claims 1 to 6, **characterised in that** the first and/or second cover layer (1a, 1b) is/are joined to the middle layer (2) in a curved motion.

8. The method according to one of the preceding claims, **characterised in that** a rotating relative motion between the first and/or second cover layer (1a, 1b) and the middle layer (2) is provided, wherein the rotation is preferably performed about an axis perpendicular to the surface provided with the adhesive.

9. The method according to Claim 1, **characterised in that** the honeycombed middle layer (2) is stretched during the step of joining the first and/or second cover layer (1a, 1b) to the middle layer (2), and/or in that the honeycombed middle layer (2) is stretched during the step of performing a relative movement between the first and/or second cover layer (1a, 1b) and the middle layer (2).

10. The method according to one of the preceding claims, **characterised in that** the surfaces turned towards one another of the first and/or second cover layers (1a, 1b) and of the middle layer (2), in particular the edges (7) of webs (5) of a honeycombed middle layer (2), obtain different frictional resistances with respect to one another in different directions.

11. The method according to Claim 11, **characterised in that**, when providing the middle layer (2), the edges (7) of the webs (5) are canted, and/or **in that**, when providing the middle layer (2), the surface(s) of the middle layer (2) obtains/obtain a sawtooth profile in cross section.

12. A lightweight board, in particular for furniture and interior finishing, preferably produced by a method according to one of the preceding claims,
- comprising a first and a second cover layer (1a, 1b) containing cellulose material, and
- comprising a honeycombed middle layer (2), which is arranged between the two cover layers (1a, 1b),
- the middle layer (2) consisting of paper, cardboard or card,
**characterised in that** an adhesive (3) is provided on a surface of the first cover layer (1a), which is distributed by a relative movement, which is at least partially parallel to the cover layer surface, between the first cover layer (1a) and the middle layer (2).

13. The lightweight board according to Claim 12, **characterised in that** an adhesive (3) is provided on a surface of the second cover layer (1b), which is distributed by a relative movement between the second cover layer (1b) and the middle layer (2).

14. The lightweight board according to one of Claims 12 to 13, **characterised in that** the surfaces turned towards one another of the first and/or second cover layer (1a, 1b) and the middle layer (2), in particular the edges (7) of webs (5) of the honeycombed middle layer (2), have different frictional resistances with respect to one another in different directions.

15. The lightweight board according to Claim 14, **characterised in that** the edges (7) of the webs (5) are canted, and/or **in that** the surface(s) of the middle layer (2) has or have a sawtooth profile in cross section.
